# Europäisches Patentamt

# European Patent Office

# Office européen des brevets

(11) Veröffentlichungsnummer: **0 084 780**
**B1**

(12) **EUROPÄISCHE PATENTSCHRIFT**

(45) Veröffentlichungstag der Patentschrift:
**14.06.89**

(51) Int. Cl.⁴: **H 04 N 1/40,** G 06 K 11/02

(21) Anmeldenummer: **83100093.0**

(22) Anmeldetag: **07.01.83**

(54) **Verfahren und Schaltungsanordnung zur Richtungsbestimmung einer Vorlagenkontur.**

(30) Priorität: **21.01.82 US 341525**

(43) Veröffentlichungstag der Anmeldung:
**03.08.83 Patentblatt 83/31**

(45) Bekanntmachung des Hinweises auf die Patenterteilung:
**14.06.89 Patentblatt 89/24**

(84) Benannte Vertragsstaaten:
**CH DE FR GB IT LI NL SE**

(73) Patentinhaber: **DR.-ING. RUDOLF HELL GmbH,**
**Grenzstrasse 1-5, D-2300 Kiel 14 (DE)**

(72) Erfinder: **Schwartz, Robert, 300 Rabro Drive East,**
**Hauppage, N.Y. 11788 (US)**

(56) Entgegenhaltungen:
**FR-A- 2 386 213**
**FR-A- 2 447 052**
**US-A- 3 502 880**

**IBM TECHNICAL DISCLOSURE BULLETIN, Band 20, Nr. 1, Juni 1977, Seiten 254-256, New York, US; D.R. THOMPSON: "Skew coding technique for digital halftones"**

## Beschreibung

### Technisches Gebiet

Die Erfindung bezieht sich auf die elektronische Reproduktionstechnik und Druckformherstellung.

### Zugrundeliegender Stand der Technik

In einem Graviergerät zur gerasterten Druckformherstellung und in einem Scanner zur gerasterten oder ungerasterten Druckformherstellung wird eine zu reproduzierende Vorlage mit einem optoelektronischen Abtastorgan bildpunkt- und zeilenweise abgetastet und das dabei gewonnene Bildsignal nach den Erfordernissen des Reproduktionsprozesses korrigiert. Das korrigierte Bildsignal steuert ein Aufzeichnungsorgan, welches die gerasterte oder ungerasterte Druckform auf einem Aufzeichnungsmedium erzeugt.

Bei einem Graviergerät erfolgt die Bildung der Rasterpunkte auf einem Druckzylinder mit dem Gravierstichel eines elektromagnetischen Gravierorgans oder mit dem Energiestrahl eines Energiestrahl-Erzeugers, bei einem Scanner ist das Aufzeichnungsorgan eine helligkeitsmodulierte Lichtquelle zur gerasterten oder ungerasterten Belichtung von Auszugsfilmen oder Druckplatten.

Die zu reproduzierenden Vorlagen sind in den meisten Fällen Kombinationen aus Halbtonbildern mit weichen Konturen (kleine Tonwertänderungen) und aus Schriftzeichen oder Strichelementen von graphischen Darstellungen mit harten Konturen (große Tonwertänderungen).

Die exakte Wiedergabe von Konturen in einer gerasterten Druckform wirft besondere Probleme auf. Während eine Kontur abtastseitig eine beliebige Lage zu dem Abtastraster einnimmt, kann die Kontur auf der Aufzeichnungsseite normalerweise durch die exakt in dem Aufzeichnungsraster angeordneten Rasterpunkte oder Näpfchen nur angenähert wiedergegeben werden. Beispielsweise weist eine schräg zur Aufzeichnungsrichtung verlaufende Kontur störende Treppenstrukturen auf.

Zur Glättung solcher Konturen ist es bereits bekannt, diejenigen Rasterpunkte, welche im Bereich dieser Kontur liegen, aus den exakten Druckraster-Positionen in die Kontur zu verschieben.

Bei der bekannten Lösung wird auf der Abtastseite die Lage einer Kontur nur sehr grob festgestellt und auf der Aufzeichnungsseite lediglich eine Verschiebung der Rasterpunkte senkrecht zur Aufzeichnungsrichtung vorgenommen, so daß die Wiedergabe nahezu senkrecht zur Aufzeichnungsrichtung verlaufender Konturen überhaupt nicht verbessert werden kann.

Bei Verwendung eines Energiestrahls zur Rasterpunkt-Erzeugung ließe sich eine Rasterpunkt-Verschiebung in beliebiger Richtung zum Druckraster vornehmen, da der Energiestrahl trägheitslos ablenkbar bzw. schnell ein- und ausschaltbar ist, so daß Konturen, die unter beliebigen Winkeln zum Druckraster liegen, durch eine Rasterpunkt-Verschiebung geglättet werden könnten. Voraussetzung dafür ist aber, daß die Lage einer Kontur nicht nur in bezug auf den exakten Durchgang dieser Kontur durch den Abtastpunkt, sondern auch hinsichtlich des Winkels zum Abtast- bzw. Aufzeichnungsraster genau ermittelt wird.

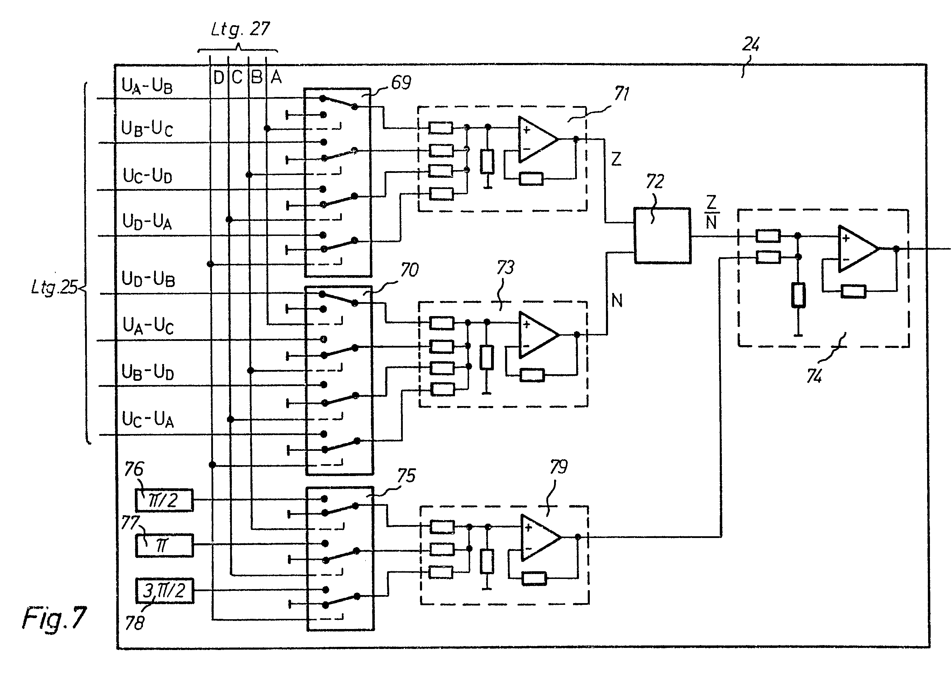

Aus der US-A-3 502 880 ist eine Abtasteinrichtung bekannt, mit der sich eine Kurve oder Kontur auf einer Fläche in Abhängigkeit von festgestellten Abweichungen der Kurve bzw. Kontur von vorgebbaren Bezugsachsen automatisch verfolgen läßt. Die Abtasteinrichtung weist einen Abtastkopf auf, in dem in einem Ausführungsbeispiel (Fig. 7) symmetrisch um ein zentrales Sensorelement mehrere Sensorelemente angeordnet sind, wobei das Anordnungsmuster die aufeinander senkrecht stehenden Bezugsachsen definiert. Die Sensorelemente tasten die Fläche ab und erzeugen Ausgangssignale, welche ein Maß für die Abweichung jedes Sensorelements von der Kurve bzw. Kontur sind. Jedes Ausgangssignal der umliegenden Sensorelemente wird mit dem Ausgangssignal des zentralen Sensorelements verglichen und die Vergleichssignale einer Auswerteschaltung zugeführt. Die Auswerteschaltung erzeugt entsprechende Kontrollsignale, wenn Abweichungen der Bezugsachsen von der Kurve bzw. Kontur festgestellt werden. Die Kontrollsignale steuern eine Servo-Einrichtung, mit deren Hilfe der Abtastkopf so verschoben wird, daß die Abweichungen der Bezugsachsen zur Kurve bzw. Kontur minimal sind.

Mit der bekannten Abtasteinrichtung lassen sich zwar Lageabweichungen einer Kontur bezüglich vorgebbarer Bezugsachsen feststellen, sie ist aber nicht geeignet, bei der Vorlagen-Abtastung jeweils den Winkel, der von einer durch den zentralen Abtastbereich verlaufenden Konturlinie und einer durch den zentralen Abtastbereich verlaufenden Bezugslinie eingeschlossen wird, mit der für die Reproduktionstechnik erforderlichen Genauigkeit festzustellen.

Der Erfindung liegt daher die Aufgabe zugrunde, ein Verfahren und eine Schaltungsanordnung anzugeben, mit denen die Winkel von Konturlinien bezüglich einer Bezugslinie mit hoher Genauigkeit festgestellt werden.

Diese Aufgabe wird bezüglich des Verfahrens durch die Merkmale des Anspruchs 1 und bezüglich der Schaltungsanordnung durch die Merkmale des Anspruchs 7 gelöst.

Die Erfindung wird im folgenden anhand der Figuren 1–8 näher erläutert.

Es zeigen:

Figur 1: eine prinzipielle Schaltungsanordnung zur Richtungsbestimmung einer Kontur bei einer elektronischen Bildreproduktionseinrichtung;

Figur 2: eine grafische Darstellung der Abtastbereiche;

Figur 3: Signalverläufe;

Figur 4: ein Ausführungsbeispiel für Abtasteinrichtung und Differenz-Stufe;

Figur 5: ein Ausführungsbeispiel für die Konturerkennungs-Stufe;

Figur 6: ein Ausführungsbeispiel für die Quadrantenerkennungs-Stufe;

Figur 7: ein Ausführungsbeispiel für den Winkel-Rechner; und

Figur 8: Ausführungsformen des optischen Aufbaus der Abtasteinrichtung.

## Bester Weg zur Ausführung der Erfindung

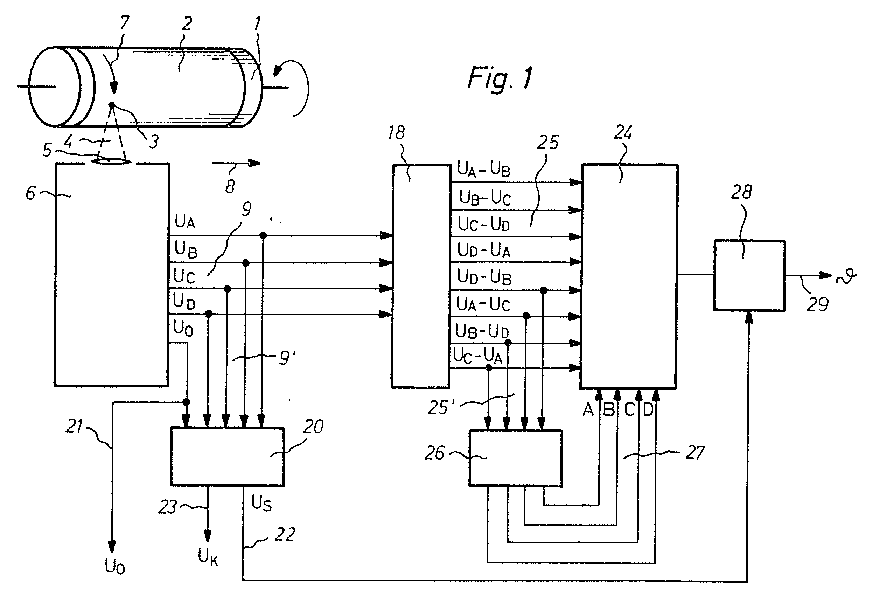

Figur 1 zeigt eine prinzipielle Schaltungsanordnung zur Richtungsbestimmung einer Kontur in einer Vorlage bei einer elektronischen Bildreproduktionseinrichtung, von der lediglich die Abtastseite dargestellt ist. Die elektronische Bildreproduktionseinrichtung ist beispielsweise ein Scanner oder ein Graviergerät.

Auf einer rotierenden Abtasttrommel 1 ist eine Vorlage 2 aufgespannt, die Halbtonbilder, Schriftzeichen oder Strichelemente von grafischen Darstellungen mit beliebigen Konturverläufen aufweisen möge. Die Vorlage 2 wird von einem Lichtpunkt 3 einer nicht dargestellten Lichtquelle bildpunkt- und zeilenweise beleuchtet. Bei einer Aufsichts-Vorlage gelangt das reflektierte und bei einer Durchsichts-Vorlage das durchgelassene und helligkeitsmodulierte Abtastlicht 4 über ein Abtast-Objektiv 5 in eine Abtasteinrichtung 6, welche sich senkrecht zur Abtastrichtung 7 axial an der Abtasttrommel 1 in Richtung eines Pfeiles 8 entlangbewegt.

Die Abtasteinrichtung 6 wandelt das Abtastlicht 4 in ein Bildsignal $U_O$ und im gewählten Ausführungsbeispiel in vier Umfeldsignale $U_A$, $U_B$, $U_C$ und $U_D$ auf Leitungen 9 um.

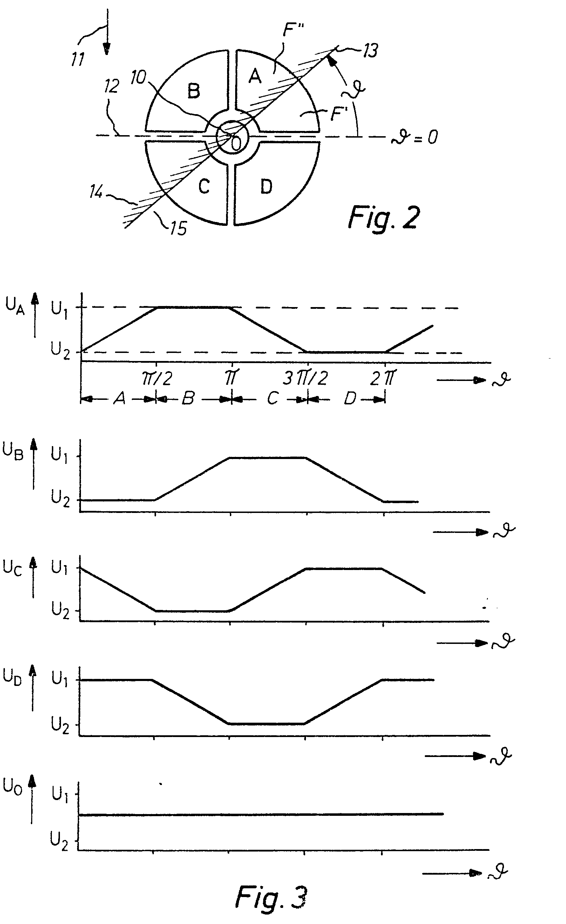

Die Erzeugung des Bildsignals $U_O$ und der vier Umfeldsignale $U_A$ bis $U_D$ wird zunächst anhand der Figuren 2 und 3 näher erläutert.

In Figur 2 sind ein kreisförmiger, als Bildpunkt bezeichneter zentraler Abtastbereich O mit dem Zentrum 10 und vier konzentrisch angeordnete kreisringförmige Umfeld-Quadranten A, B, C und D dargestellt. Die Fläche, welche die Umfeld-Quadranten A, B, C und D bedecken, entspricht etwa der Größe des Lichtpunktes 3.

Weiterhin ist in Figur 2 die Abtastrichtung durch einen Pfeil 11 und eine senkrecht zur Abtastrichtung und durch das Zentrum 10 verlaufende Bezugslinie 12 angedeutet. Figur 2 zeigt außerdem eine im Bereich des Umfeldes als gradlinig angenommene Kontur 13 auf der Vorlage 2, wobei unter Kontur die Grenzlinie zwischen Bereichen unterschiedlicher Tonwerte oder Dichten verstanden wird. Die Kontur 13 ist zu dem Zeitpunkt dargestellt, zu dem sie aufgrund der Relativbewegung zwischen Vorlage 2 und Abtasteinrichtung 6 gerade durch das Zentrum 10 verläuft. Im Bereich 14 links der Kontur 13 möge die Vorlage den dunkleren Tonwert und in dem Bereich 15 rechts der Kontur 13 den helleren Tonwert aufweisen. Der Hell/Dunkel-Übergang der Kontur 13 möge außerdem mit der Bezugslinie 12 den Winkel $\vartheta$ einschließen, der bestimmt werden soll.

Das in der Abtasteinrichtung 6 erzeugte Bildsignal $U_O$ ist ein Maß für die Helligkeit des Abtastbereichs O bzw. des Bildpunktes und die Umfeldsignale $U_A$ bis $U_D$ ein Maß für die Helligkeit der jeweils durch die Umfled-Quadranten A bis D definierten Abtastbereiche bzw. die mittlere Helligkeit der in die Umfeld-Quadranten A bis D fallenden Bildpunkte.

Figur 3 zeigt die Verläufe des Bildsignals $U_O$ und der vier Umfeldsignale $U_A$, $U_B$, $U_C$ und $U_D$ in Abhängigkeit des Winkels $\vartheta$ und zwar für den Fall, daß der Hell/Dunkel-Übergang der Kontur 13 von der Bezugslinie 12 ($\vartheta = 0$) aus eine volle Umdrehung um das Zentrum 10 entgegen dem Uhrzeigersinn ausführen möge. Ferner ist durch einen entsprechenden Abgleich in der Abtasteinrichtung 6 dafür Sorge getragen, daß Bildsignal $U_O$ und Umfeldsignale $U_A$ bis $U_D$ bei einer homogenen Beleuchtung aller Quadrantenflächen dieselben Signalamplituden aufweisen. Bei dem dargestellten Verlauf der Kontur 13 durch das Zentrum 10 ist der Bildsignalwert $U_O$ gemäß Gleichung (1) gleich dem aus den Umfeldsignalen $U_A$ bis $U_D$ gebildeten Mittelwert.

$$U_O = U_m = \frac{U_A + U_B + U_C + U_D}{4} \qquad (1)$$

Durch die angenommene Drehung der Kontur 13 um das Zentrum 10 ändert sich in den einzelnen Umfeld-Quadranten A bis D die flächenmäßige Hell/Dunkel-Bedeckung und damit die gemessene Helligkeit in den einzelnen Bereichen, wobei ein Umfeldsignal bei einer vollen Bedeckung mit dem helleren Tonwert einen hohen Wert ($U_1$) bei einer vollen Bedeckung mit dem dunkleren Tonwert einen kleinen Wert ($U_2$) und zwischen den Extremwerten einen vom flächenmäßigen Bedeckungsgrad bzw. vom Drehwinkel $\vartheta$ abhängigen Verlauf aufweist.

Der Winkel $\vartheta$ zwischen der Bezugslinie und dem Hell/Dunkel-Übergang der Kontur wird erfindungsgemäß auf folgende Weise ermittelt.

Zunächst wird in einem ersten Schritt derjenige Umfeld-Quadrant festgestellt, in dem der Hell/Dunkel-Übergang der Kontur in Winkelrichtung liegt. Dazu werden aus den vier Umfeldsignalen $U_A$, $U_B$, $U_C$ und $U_D$ jeweils die vier Differenzsignale $(U_D-U_B)$, $(U_A-U_C)$, $(U_B-U_D)$ und $U_C-U_A$ gebildet und daraus das maximale Differenzsignal ermittelt. Wie aus den Signalverläufen der Figur 3 ersichtlich, ist jeder Umfeld-Quadrant durch ein bestimmtes maximales Differenzsignal gekennzeichnet, und zwar ist im Umfeld-Quadranten A das Differenz-Signal $(U_D-U_B)$, im Umfeld-Quadranten B das Differenzsignal $(U_A-U_C)$, im Umfeld-Quadranten C das Differenzsignal $(U_B-U_D)$ und im Umfeld-Quadranten D das Differenzsignal $(U_C-U_A)$ maximal. Somit kann durch die Maximumauswahl aus den vier Differenzsignalen der zugehörige Umfeld-Quadrant ermittelt werden.

Nachdem der betreffende Umfeld-Quadrant bekannt ist, wird in einem zweiten Verfahrensschritt der zugehörige Winkel aus den zuvor genannten Differenzsignalen und weiteren Differenzsignalen $(U_A-U_B)$, $(U_B-U_C)$, $(U_C-U_D)$ und $(U_D-U_A)$ berechnet, was für den Umfeld-Quadranten A anhand der Figur 2 näher erläutert werden soll.

Die Gesamtfläche F des Umfeld-Quadranten A wird durch die Kontur 13 in zwei Teilflächen F′ und F″ unterteilt, wobei die Teilfläche F′ mit dem helleren Tonwert und die Teilfläche F'' mit dem dunkleren Tonwert der Kontur 13 verknüpft ist. Die Teilflächen F' und F'' sind wie folgt vom Winkel $\vartheta$ abhängig:

$$F' = \frac{\vartheta}{\pi/2} F_0$$

$$F'' = \frac{\pi/2 - \vartheta}{\pi/2} F_0 \qquad (2)$$

$$F_0 = F' + F''$$

Somit setzt sich auch das Umfeldsignal $U_A$ aus zwei flächenproportionalen Teilsignalen $U'_A$ und $U''_A$ zusammen, wobei $U'_A = U_1$ bei $F' = F_0$ und $U''_A = U_2$ bei $F'' = F_0$ ist.

$$U'_A = \frac{\vartheta}{\pi/2} U_1$$

$$U''_A = \frac{\pi/2 - \vartheta}{\pi/2} U_2 \qquad (3)$$

Da bei dem angenommenen Konturverlauf $U_B = U_2$ und $U_D = U_1$ ist, ergibt sich das Umfeldsignal $U_A$ zu:

$$U_A = \frac{\vartheta}{\pi/2} U_D + \frac{\pi/2 - \vartheta}{\pi/2} U_B \qquad (4)$$

Daraus läßt sich der Winkel $\vartheta$ für den Umfeld-Quadranten A berechnen zu:

$$\vartheta = \frac{\pi}{2} \frac{(U_A - U_B)}{(U_D - U_B)} \qquad (5)$$

Die Berechnungsgrundlagen für alle Umfeld-Quadranten sind in der nachfolgenden Tabelle zusammengefaßt.

| max. Differenz | Quadrant | Winkel |
|---|---|---|
| $U_D - U_B$ | A | $\vartheta = \dfrac{\pi}{2} \dfrac{U_A - U_B}{U_D - U_B}$ |
| $U_A - U_C$ | B | $\vartheta = \dfrac{\pi}{2} \dfrac{U_B - U_C}{U_A - U_C} + \dfrac{\pi}{2}$ |
| $U_B - U_D$ | C | $\vartheta = \dfrac{\pi}{2} \dfrac{U_C - U_D}{U_B - U_D} + \pi$ |
| $U_C - U_A$ | D | $\vartheta = \dfrac{\pi}{2} \dfrac{U_D - U_A}{U_C - U_A} + \dfrac{3\pi}{2}$ |

Die in der Tabelle zusammengestellten Operationen werden in der Schaltungsanordnung nach Figur 1 durchgeführt, die anschließend näher erläutert werden soll.

Die in der Abtasteinrichtung 6 gewonnenen Umfeldsignale $U_A$ bis $U_D$ gelangen über die Leitungen 9 auf eine Differenz-Stufe 18. Die Umfeldsignale $U_A$ bis $U_D$ sowie das Bildsignal $U_0$ beaufschlagen über Leitungen 9' eine Konturerkennungs-Stufe 20. Das Bildsignal $U_0$ wird außerdem über eine Leitung 21 an die in Figur 1 nicht dargestellte Aufzeichnungsseite der Bildreproduktionseinrichtung gegeben.

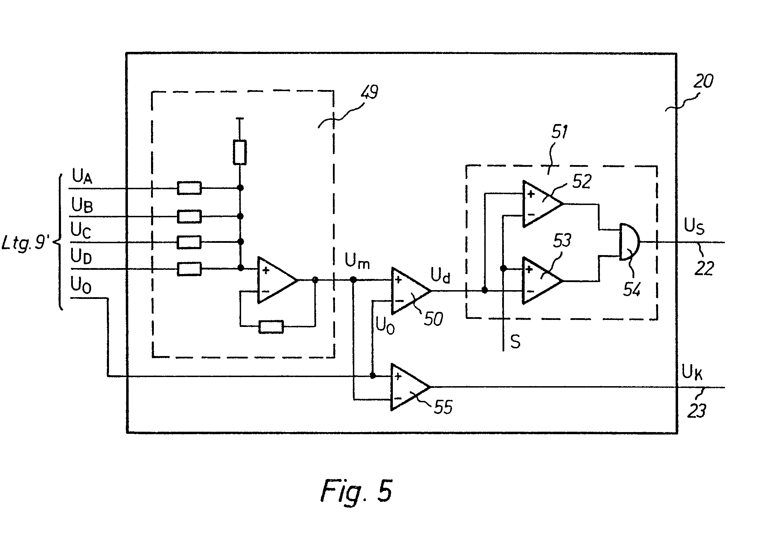

Die Konturerkennungs-Stufe 20, die ausführlicher in Figur 5 dargestellt ist, erzeugt jeweils bei Abtastung einer Kontur in der Vorlage, genauer beim Durchgang einer Kontur durch das Zentrum 10 des zentralen Abtastbereiches O (Figur 2) auf einer Leitung 22 ein Steuersignal $U_S$, dessen Funktion später angegeben wird.

Gleichzeitig kann in der Konturerkennungs-Stufe 20 ein Korrektursignal $U_K$ auf einer Leitung 23 erzeugt werden, welches zur elektronischen Unscharfmaskierung bei der Wiederaufzeichnung einer Vorlage dient.

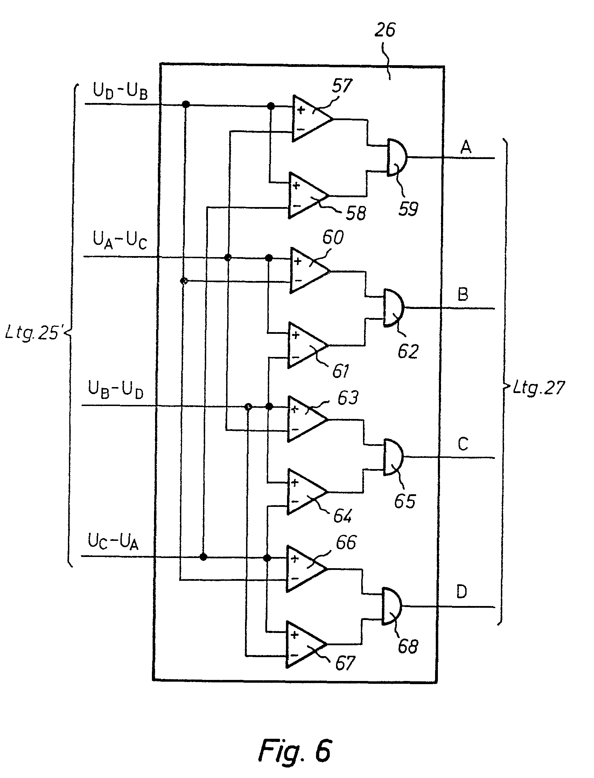

In der Differenz-Stufe 18 werden aus den vier Umfeldsignalen $U_A$ bis $U_D$ die zuvor genannten acht Differenzsignale gebildet und über Leitungen 23 einem Winkel-Rechner 24 zugeführt. Die Differenzsignale $(U_D - U_B)$, $(U_A - U_C)$, $(U_B - U_D)$ und $(U_C - U_A)$ gelangen außerdem über Leitungen 25' an eine Quadrantenerkennungs-Stufe 26, die in Figur 6 näher beschrieben ist. Die Quadrantenerkennungs-Stufe 26 erkennt nach Spalte I und II der angegebenen Tabelle den betreffenden Umfeld-Quadranten A bis D und liefert entsprechende Quadrantenerkennungs-Signale A bis D über Leitungen 27 an den Winkel-Rechner 24. Der Winkel-Rechner 24 ermittelt aus den acht Differenzsignalen auf den Leitungen 25 nach Spalte III der Tabelle in Abhängigkeit der erkannten Umfeld-Quadranten die zugehörigen Winkel $\vartheta$. Eine vom Steuersignal $U_S$ auf der Leitung 22 gesteuerte Tor-Stufe 28 sorgt dafür, daß der Winkel $\vartheta$ nur dann über eine Leitung 29 ausgegeben wird, wenn sich die Kontur in der zur exakten Winkelrechnung erforderlichen Position, nämlich im Zentrum 10 des zentralen Abtastbereiches O, (Figur 2) befindet.

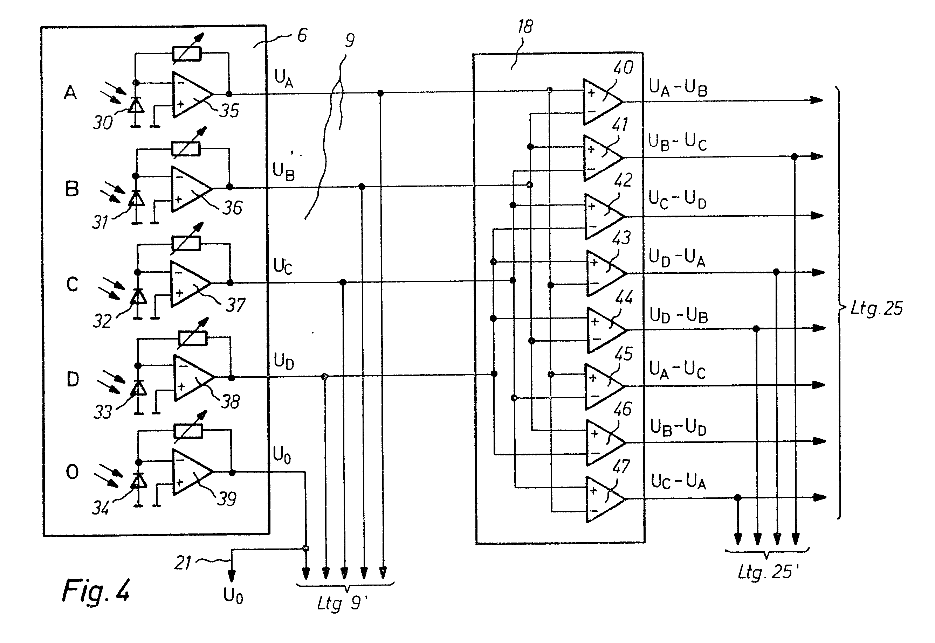

Figur 4 zeigt ein Ausführungsbeispiel für die Abtasteinrichtung 6 und für die Differenz-Stufe 18.

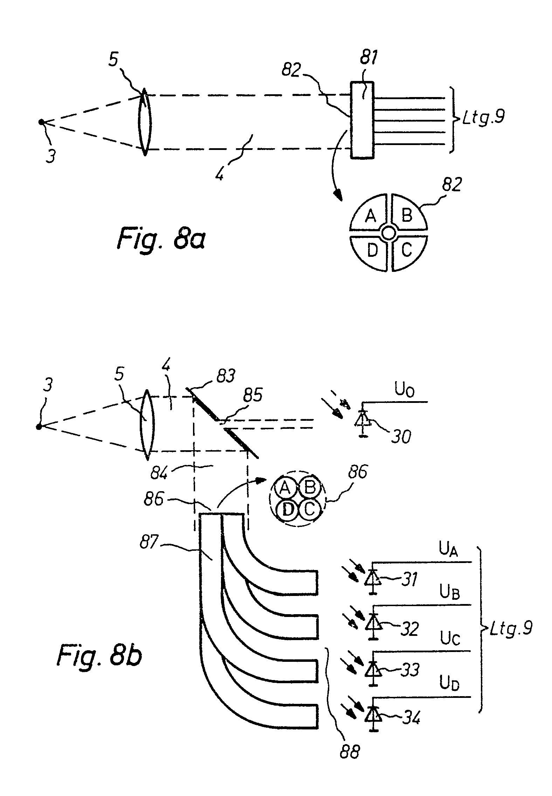

Die Abtasteinrichtung 6 weist im dargestellten Ausführungsbeispiel fünf optoelektronische Wandler 30, 31, 32, 33 und 34 z. B. in Form von Fotodioden, und ebenfalls fünf nachgeschaltete, in der Verstärkung einstellbare Verstärker 35, 36, 37, 38 und 39 auf. Die optoelektronischen Wandler 30 bis 34 wandeln das aus dem zentralen Abtastbereich O und den Umfeld-Quadranten A bis D (Figur 2) empfangene Abtastlicht in das Bildsignal $U_0$ und die Umfeldsignale $U_A$ bis $U_D$. Durch Einstellung der Verstärkungsgrade der Verstärker 35 bis 39 können die optoelektronischen Wandler 30 bis 34 auf dieselbe Empfindlichkeit abgeglichen werden. Möglichkeiten für den optischen Aufbau der Abtasteinrichtung 6 sind in Figur 8 angegeben.

Es liegt im Rahmen der Erfindung zur Erfassung der Bildpunkt-Umgebung Fotodioden-Zeilen oder eine Fotodioden-Matrix als optoelektronische Wandler zu verwenden. Eine andere mögliche Ausführungsform der Abtasteinrichtung 6 weist lediglich einen optoelektronischen Wandler zur Bildpunkt-Abtastung und zur Gewinnung eines Bildsignals auf. Dem optoelektronischen Wandler ist dann eine Speichereinrichtung nachgeschaltet, in der die digitalisierten Bildsignalwerte abgelegt wurden. In diesem Falle werden die Umfeldsignale aus den abgespeicherten Bildsignalwerten berechnet, was z. B. nach der DE-PS-2 137 676 erfolgen kann. Bei der Speichereinrichtung kann es sich um Zeilenspeicher, in denen die Bildsignalwerte mehrerer der aktuell abgetasteten Zeile benachbarter Zeilen oder Zeilenabschnitte zwischengespeichert werden, oder um einen Ganzbild-Speicher handeln, in dem alle Bildsignalwerte einer Vorlage abgelegt sind.

Die Differenz-Stufe 18 besteht aus acht Differenzverstärkern 40, 41, 42, 43, 44, 45, 46 und 47.

Figur 5 zeigt ein Ausführungsbeispiel der Konturerkennungs-Stufe 20.

Aus den Umfeldsignalen $U_A$ bis $U_D$ auf den Leitungen 9' wird in einem Mittelwert-Rechner 49, der als Addierverstärker mit der Verstärkung 0,25 ausgebildet ist, das Mittelwert-Signal $U_m$ gemäß Gleichung (6) gebildet.

$$U_m = 0,25 \, (U_A + U_B + U_C + U_D) \qquad (6)$$

Das Mittelwert-Signal $U_m$ und das Bildsignal $U_o$ werden an einen ersten Differenzverstärker 50 gegeben, indem nach Gleichung (7) das Differenzsignal $U_d$ gebildet wird.

$$U_d = U_m - U_o \qquad (7)$$

Aufgrund der zuvor erwähnten Abgleichbedingungen für die Abtasteinrichtung 6 ist das Differenzsignal $U_d = 0$, wenn in Figur 2 die Kontur 13 genau durch das Zentrum 10 des Abtastbereiches O läuft, somit ist die Bedingung $U_d = O$ Kriterium für das Vorhandensein einer Kontur in der Vorlage. Um die Konturerkennung unempfindlicher gegen Signalschwankungen zu machen, wird das Differenzsignal $U_d$ in einer dem Differenzverstärker 50 nachgeschalteten Schwellenwert-Stufe 51 mit einem Schwellenwert S verglichen und das Steuersignal $U_s$ «Kontur erkannt» auf der Leitung 22 dann abgegeben, wenn das Differenzsignal $U_d$ innerhalb des durch den Schwellenwert S definierten Ansprechbereiches $\pm$S liegt. Die Schwellenwert-Stufe 51 besteht aus zwei Komparatoren 52 und 53 und einem nachgeschalteten Und-Tor 54. Die Komparatoren 52 und 53 sind z. B. integrierte Bausteine vom Typ LM 311 der Firma National Semiconductors und liefern TTL-Ausgangspegel, sodaß sie direkt mit Logikschaltungen verknüpft werden können.

In der Konturerkennungs-Stufe 20 wird durch eine weitere Differenzbildung gemäß Gleichung (8) in einem zweiten Differenzverstärker 55 ein Korrektursignal $U_K$ auf der Leitung 23 erzeugt, das zur elektronischen Unscharfmarkierung verwendet werden kann.

$$U_K = U_o - U_m \qquad (8)$$

Figur 6 zeigt ein Ausführungsbeispiel der Quadrantenerkennung-Stufe 26.

Die Quadrantenerkennungs-Stufe 26 weist für jeden Umfeld-Quadranten zwei Komparatoren und ein nachgeschaltetes Und-Tor auf, und zwar für den Umfeld-Quadranten A die Komparatoren 57 und 58 sowie das Und-Tor 59; für den Umfeld-Quadranten B die Komparatoren 60 und 61 sowie das Und-Tor 62; für den Umfeld-Quadranten C die Komparatoren 63 und 64 sowie das Und-Tor 65 und für den Umfeld-Quadranten D die Komparatoren 66 und 67 sowie das Und-Tor 68.

Die Komparatoren haben wiederum TTL-Ausgangspegel, sodaß sie direkt mit den nachgeschalteten Und-Toren verknüpft werden können.

Die Komparatoren, denen nach Spalte I der zuvor genannten Tabelle die Differenzsignale $(U_D-U_B)$, $(U_A-U_C)$, $(U_B-U_D)$ und $(U_C-U_A)$ zugeführt werden, stellen die jeweils maximalen Differenzsignale fest. Durch Auswerten der maximalen Differenzsignale in den Und-Toren werden gemäß der Zuordnung nach Spalte I und II der Tabelle die entsprechenden Umfeld-Quadranten A bis D erkannt.

Wenn beispielsweise das Differenzsignal $(U_D-U_B)$ einen maximalen Wert hat, ist lediglich bei den Komparatoren 57 und 58 und somit auch beim Und-Tor 59 der Ausgangspegel «logisch H», während bei allen anderen Und-Toren 62, 65 und 68 der Ausgangspegel «logisch L» ist. Ausgangspegel «logisch H» heißt in diesem Falle, daß der Umfeld-Quadrant A erkannt wurde.

Figur 7 zeigt ein Ausführungsbeispiel des Winkel-Rechners 24.

Im Winkel-Rechner 24 wird für jeden Umfeld-Quadranten A bis D der betreffende Winkel $\vartheta$ gemäß den Gleichungen nach Spalte III der Tabelle gebildet.

Die von der Differenz-Stufe 18 erzeugten Differenzsignale werden an zwei, von den Quadrantenerkennungs-Signalen A bis D gesteuerten Analogschaltern 69 und 70 gegeben, die in der Darstellung durch mechanische Schaltmittel symbolisiert sind. Als Analogschalter können beispielsweise integrierte Bausteine vom Typ LF 11 331 der Firma National Semiconductors verwendet werden.

In Abhängigkeit der in der Quadrantenerkennung-Stufe 26 erkannten Umfeld-Quadranten A bis D bzw. der zugehörigen Quadrantenerkennungs-Signale A bis D werden im Analogschalter 69 die gemäß Spalte III der Tabelle zur Bildung des Zählers «Z» benötigten Differenzsignale und im Analogschalter 70 die zur Bildung des Nenners «N» benötigten Differenzsignale ausgewählt. Die im Analogschalter 69 ausgewählten Differenzsignale werden in einem nachgeschalteten Verstärker 71 mit dem Verstärkungsfaktor «π/2» verstärkt und als Z-Signale an einen Dividierer 72 gegeben. Die im Analogschalter 70 ausgewählten Differenzsignale werden in einem zweiten Verstärker 73 mit dem Verstärkungsfaktor «1» verstärkt und als N-Signale ebenfalls dem Dividierer 72 zugeführt, der den Bruch Z/N berechnet. Im Dividierer 72 (z.B. vom Typ 436 der Firma Analog Devices) ist durch eine interne Klemmschaltung dafür gesorgt, daß der Dividierer bei N = 0 nicht übersteuert wird. Dem Dividierer 72 ist ein Addierer 74 nachgeschaltet, in dem ggf. dem berechneten Bruch gemäß Spalte III der Tabelle die Werte «π/2», «π» oder «3π/2» hinzuaddiert werden. Dazu werden mit Hilfe eines weiteren Analogschalters 75, der von den Quadrantenerkennungs-Signalen B, C und D steuerbar ist, wahlweise drei Spannungsgeber 76, 77 und 78 für die Werte «π/2», «π» und «3π/2» über einen anderen Verstärker 79 mit dem Verstärkungsfaktor «1» zu dem Addierer 74 durchgeschaltet. die Ausgangswerte des Addierers 74 auf der Leitung 29 repräsentieren den gesuchten Winkel $\vartheta$.

Es liegt selbstverständlich im Rahmen der Erfindung, die zuvor beschriebene Schaltung aus digitalen Komponenten aufzubauen und die Winkelberechnung digital vorzunehmen.

Figur 8 zeigt Möglichkeiten für den optischen Aufbau der Abtasteinrichtung 6.

In Figur 8a wird in vorteilhafter Weise als optoelektronischer Wandler 81 eine sogenannte Quadranten-Fotodiole, z. B. von Typ C 30 805 der Fa. RCA verwendet, die von dem über das Abtast-Objektiv 5 in die Abtastrichtung 6 eintretende Abtastlicht 4 getroffen wird. Die Quadranten-Fotodiode 81 weist entsprechend dem Abtastbereich 0 und den vier Umfeld-Quadranten A bis D (Figur 2) geformte und voneinander isolierte Lichteintrittsflächen 82 auf und erzeugt fünf selektive Ausgangssignale, nämlich das Bildsignal $U_O$ und die Umfeldsignale $U_A$ bis $U_D$ auf den Leitungen 9.

Im optischen Aufbau der Abtasteinrichtung 6 nach Figur 8b befindet sich im Abtastlicht 4 ein kreisringförmiger Spiegel 83, der aus dem Abtastlicht 4 ein Teilbündel 84 ausspiegelt. Die Öffnung 85 in der Spiegelmitte ist die Bildpunkt-Blende, durch die das Abtastlicht aus dem Abtastbereich 0 auf die Fotodiode 30 fällt. Die Fotodiode 30 erzeugt das Bildsignal $U_O$. Das Teilbündel 84 repräsentiert das Umfeld, in dem die vier Lichttrittsflächen 86 eines geordneten Lichtleiterbündels 87 angeordnet sind. An die Lichtaustrittsflächen 88 des Lichtleiterbündels 87 sind die vier Fotodioden 31, 32, 33 und 34 angekoppelt und erzeugen die vier Umfeldsignale $U_A$ bis $U_D$. Alternativ kann auch das aus dem Abtastbereich 0 stammende Abtastlicht mittels eines Lichtleiters zu der Fotodiode 30 transportiert werden, und der Spiegel 83 kann entfallen. In den dargestellten Beispielen wird jeweils nur ein Bildsignal für Schwarz/Weiß-Abtastung erzeugt. Selbstverständlich kann die Umfeldauswertung auch bei einer Abtasteinrichtung für Farbabtastung verwendet werden.

**Patentansprüche**

1. Verfahren zur Bestimmung der Richtung einer Vorlagenkontur, bei dem die Vorlage zur Gewinnung eines Bildsignals bildpunkt- und zeilenweise optoelektronisch abgetastet und zusätzlich ein vergrößerter Abtastbereich um die Bildpunkte ausgewertet wird, dadurch gekennzeichnet, daß

a) der Abtastbereich in vier, sein Zentrum umgebende Quadranten (A, B, C, D) aufgeteilt wird, wobei eine der Teilungslinien Bezugslinie für den Winkel ($\vartheta$) ist, den dieser mit der Bezugslinie und dem Hell/Dunkel-Übergang einer durch das Zentrum des Abtastbereiches verlaufenden Kontur einschließt,

b) durch Messen der Helligkeiten in den einzelnen Quadranten (A, B, C, D) Umfeldsignale ($U_A$, $U_B$, $U_C$, $U_D$) erzeugt werden, deren Größen von der flächenmäßigen Bedeckung der zugehörigen Quadranten durch den Hell/Dunkel-Übergang der Kontur abhängen,

c) aus den Umfeldsignalen ($U_A$, $U_B$, $U_C$, $U_D$) gegenüberliegender Quadranten Differenzen gebildet werden, von denen jeweils eine entsprechend der Lage des Hell/Dunkel-Überganges der Kontur maximal ist,

d) der Durchgang des Hell/Dunkel-Überganges der Kontur durch das Zentrum des Abtastbereiches festgestellt wird,

e) durch Auswählen der jeweils maximalen Differenz derjenige Quadrant festgestellt wird, in dem der Hell/Dunkel-Übergang der Kontur beim Durchgang durch das Zentrum des Abtastbereiches liegt, und

f) anschließend in Abhängigkeit von den festgestellten Quadranten der Winkel ($\vartheta$) als Summe aus dem Anfangswinkel (0; π/2; π; 3π/L) des festgestellten Quadranten und einem Bruchteil des rechten Winkels (π/2) ermittelt wird, wobei der Bruchteil gleich dem Quotienten aus einer Differenz, die sich aus dem Umfeldsignal des festgestellten Quadranten und dem Umfeldsignal des in Winkelrichtung benachbarten Quadranten ergibt und der zugehörigen maximalen Differenz des festgestellten Quadranten ist.

2. Verfahren nach Anspruch 1, dadurch gekennzeichnet, daß die Umfeldsignale durch optoelektronische Abtastung der einzelnen Quadranten gewonnen werden.

3. Verfahren nach Anspruch 1, dadurch gekennzeichnet, daß die Umfeldsignale aus den Bildsignalwerten der zu den einzelnen Quadranten gehörenden Bildpunkte berechnet werden.

4. Verfahren nach Anspruch 1 oder 2, dadurch gekennzeichnet, daß zur optoelektronischen Abtastung der Quadranten eine Quadranten-Fotodiode verwendet wird.

5. Verfahren nach Anspruch 1 oder 2, dadurch gekennzeichnet, daß zur optoelektronischen Abtastung der Quadranten Lichtleitfasern mit nachgeschalteten optoelektronischen Wandlern verwendet werden, wobei die Lichteintrittsflächen der Lichtleitfasern in den einzelnen Quadranten angeordnet sind.

6. Verfahren nach einem der Ansprüche 1–5, dadurch gekennzeichnet, daß der Durchgang des Hell/Dunkel-Übergangs der Kontur durch das Zentrum des Abtastbereiches durch Differenzbildung zwischen dem aus den Umfeldsignalen gebildeten Mittelwert und dem jeweiligen Bildsignalwert festgestellt wird.

7. Anordnung zur Bestimmung der Richtung einer Vorlagenkontur, bei der die Vorlage zur Gewinnung eines Bildsignals bildpunkt- und zeilenweise mittels eines optoelektronischen Wandlers abgetastet wird und zusätzlich ein vergrößerter Abtastbereich um die Bildpunkte ausgwertet wird, gekennzeichnet durch

a) eine Abtasteinrichtung (6) zur Gewinnung eines Bildsignlas ($U_0$) durch Messen der Helligkeit im Zentrum des Abtastbereichs und zur Gewinnung von vier Umfeldsignalen ($U_A$, $U_B$, $U_C$, $U_D$) durch Messen der Helligkeit in vier, den Abtastbereich unterteilenden Quadranten (A, B, C, D), wobei eine der Teilungslinien Bezugslinie für den Winkel ($\vartheta$) ist, den dieser mit der Bezugslinie und dem Hell/Dunkel-Übergang einer durch das Zentrum des Abtastbereiches verlaufenden Kontur einschließt.

b) eine an die Abtasteinrichtung (6) angeschlossene Differenz-Stufe (18) zur Bildung von Differenzsignalen aus den Umfeldsignalen ($U_A$, $U_B$, $U_C$, $U_D$) gegenüberliegender und benachbarter Quadranten des Abtastbereiches,

c) eine mit der Differenz-Stufe (18) in Verbindung stehende Quadrantenerkennungs-Stufe (26) zur Erzeugung eines Quadrantenerkennungs-Signals aus dem jeweiligen maximalen Differenzsignal für denjenigen Quadranten, in dem der Hell/Dunkel-Übergang der Kontur liegt,

d) eine mit der Abtasteinrichtung (6) verbundene Konturerkennungs-Stufe (20) zur Ermittlung des Durchgangs des Hell/Dunkel-Übergangs der Kontur durch das Zentrum des Abtastbereiches aus dem Bildsignal ($U_0$), und

e) einen an die Differenz-Stufe (18) und an die Quadrantenerkennungs-Stufe (26) angeschlossenen Winkel-Rechner (24) zur Berechnung des jeweiligen Winkels ($\vartheta$) bei Durchgang des Hell/Dunkel-Übergangs der Kontur durch das Zentrum in Abhängigkeit von dem festgestellten Quadranten.

8. Anordnung an Anspruch 7, dadurch gekennzeichnet, daß die Quadrantenerkennungs-Stufe (26) aus Komparatoren zur Auswahl der maximalen Differenzsignale besteht.

9. Anordnung nach Anspruch 7 oder 8, dadurch gekennzeichnet, daß der Winkel-Rechner (24) aus

a) Signalquellen (76; 77; 78) für die Anfangswinkel der Quadranten,

b) von den Quadrantenerkennungs-Signalen gesteuerten Analogschaltern (69; 70; 75) zur Auswahl der zur Berechnung erforderlichen Differenzsignale und Anfangswinkel,

c) einem Dividierer (72) zur Quotientenbildung aus den Differenzsignalen, und aus

d) einem Addierer (74) zur Addition des Quotienten und des Anfangswinkels besteht.

10. Anordnung nach einem der Ansprüche 7–9, dadurch gekennzeichnet, daß die Abtasteinrichtung (6) zur Helligkeitsmessung in den einzelnen Quadranten eine Quadranten-Fotodiode aufweist.

11. Anordnung nach einem der Ansprüche 7–9, dadurch gekennzeichnet, daß die Abtasteinrichtung (6) zur Helligkeitsmessung in den einzelnen Quadranten Lichtleitfasern mit nachgeschalteten optoelektronischen Wandlern aufweist, wobei die Eintrittsflächen der Lichtleitfasern in den Quadranten angeordnet sind.

**Claims**

1. A method for determining the direction of a pattern contour, in which the pattern is scanned opto-electronically image dot by image dot and line by line to obtain an image signal and additionally an enlarged scanning area around the image dots is evaluated, characterised in that

a) the scanning area ist divided into four quadrants (A, B, C, D) surrounding its centre whereby one of the dividing lines is a reference line for the angle ($\vartheta$) which is formed by the reference line and the light/dark transition of a contour extending through the centre of the scanning area,

b) surrounding field signals ($U_A$, $U_B$, $U_C$, $U_D$) are generated by measuring the brightness in the individual quadrants (A, B, C, D), their magnitudes depending on the area coverage of the corresponding quadrants by the light/dark transition of the contour,

c) differences are established from the surrounding field signals ($U_A$, $U_B$, $U_C$, $U_D$) of oppositely situated quadrants, of which one is a maximum in each case, corresponding to the position of the light/dark transition of the contour,

d) the passage of the light/dark transition of the contour through the centre of the scanning area is detected,

e) the quadrant in which the light/dark transition is situated during the passage through the centre of the scanning area is determined by selection of the maximum difference on each occasion, and

f) the angle ($\vartheta$) is determined thereupon as a function of the determined quadrants as a summation of the initial angle (0; $\pi/2$; $\pi$; $3\pi/2$) of the determined quadrants and a fraction of the right angle ($\pi/2$), the fraction being equal to the quotient between a difference derived from the surrounding field signal of the determined quadrants and the surrounding field signal of the adjacent quadrant in angled directions and the corresponding maximum difference of the determined quadrants.

2. A method according to claim 1, characterised in that the surrounding field signals are obtained by optoelectronic scanning of the individual quadrants.

3. A method according to claim 1, characterised in that the surrounding field signals are calculated from the image signal values of the image dots appertaining to the individual quadrants.

4. A method according to claim 1 or 2, characterised in that a quadrant photodiode is utilised for opto-electronic scanning of the quadrants.

5. A method according to claim 1 or 2, characterised in that light-conducting fibres are utilised with post-connected opto-electronic transducers for the opto-electronic scanning of the quadrants, the light input surfaces of the light-conducting fibres being situated in the individual quadrants.

6. A method according to one of the claims 1 to 5, characterised in that the passage of the light/dark transition of the contour through the centre of the scanning area is detected by deriving the difference between the mean value formed from the surrounding field signals and the momentary image signal value.

7. Apparatus for determining the direction of a pattern contour, in which the pattern is scanned opto-electronically, image dot by image dot and line by line to obtain an image signal and additionally an enlarged scanning area around the image dots is evaluated, characterised by

a) a scanning arrangement (6) for obtaining an image signal ($U_0$) by measuring the brightness at the centre of the scanning area and for obtaining four surrounding field signals ($U_A$, $U_B$, $U_C$, $U_D$) by measuring the brightness in four quadrants (A, B, C, D) subdividing the scanning area, one of the dividing lines being a reference line for the angle ($\vartheta$) which is formed by the reference line and the light/dark transition of a contour extending through the centre of the scanning area.

b) a differential stage (18) connected to the scanning arrangement (6) for deriving difference signals from the surrounding field signals ($U_A$, $U_B$, $U_C$, $U_D$) of oppositely situated and adjacent quadrants of the scanning area,

c) a quadrant recognition stage (26) in communication with the differential stage (18) for producing a quadrant recognition signal form the momentary maximum difference signal for the quadrant in which the light/dark transition of the contour ist situated,

d) a contour recognition stage (22) connected to the scanning arrangement (6) for determining the passage of the light/dark transition of the contour through the centre of the scanning area from the image signal ($U_0$),

e) an angle calculator (24) connected to the differential stage (18) and to the quadrant recognition stage (26), for calculation of the momentary angle ($\vartheta$) during the passage of the light/dark transition of the contour through the centre as a function of the detected quadrant.

8. Apparatus according to claim 7, characterised in that the quadrant recognition stage (26) comprises comparators for selection of the maximum difference signals.

9. Apparatus according to claim 7 or 8, characterised in that the angle calculator (24) incorporates

a) signal sources (76; 77; 78) for the initial angles of the quadrants,

b) analog switches (69; 70; 75) controlled by means of the quadrant recognition signals for selection of the difference signals and initial angles required for the calculation,

c) a divider (72) for establishing quotients from the difference signals, and

d) an adder (74) for addition of the quotients and of the initial angles.

10. Apparatus according to one of the claims 7 to 9, characterised in that the scanning arrangement (6) comprises a quadrant photodiode for brightness measurement in the individual quadrants.

11. Apparatus according to one of the claims 7 to 9, characterised in that the scanning arrangement (6) comprises light-conducting fibres with post-connected opto-electronic transducers for measuring the brightness in the individual quadrants, the input surfaces of the light-conducting fibres being situated in the quadrants.

## Revendications

1. Procédé pour déterminer la direction d'un contour de modèle, selon lequel on détecte le modèle de manière opto-électronique point par point et ligne par ligne pour obtenir un signal-image et en outre on exploite une plage de détection agrandie autour du point-image, procédé caractérisé en ce que:

a) on subdivise la plage de détection en quatre quadrants (A, B, C, D) entourant un centre, l'une des lignes de subdivision étant la ligne de référence pour l'angle ($\vartheta$) et celui-ci définit la ligne de référence et la transition clair/sombre d'un contour passant par le milieu de la plage de détection,

b) en mesurant la clarté dans les différents quadrants (A, B, C, D), on génère des signaux de champ environnant ($U_A$, $U_B$, $U_C$, $U_D$) dont les dimensions dépendent du recouvrement de surface des quadrants correspondants par le passage clair/sombre du contour,

c) à partir des signaux de champ environnant ($U_A$, $U_B$, $U_C$, $U_D$), on forme les différences des quadrants en regard dont l'une est respectivement maximale suivant la position du passage clair/sombre du contour,

d) on détermine le moment où le passage clair/sombre du contour passe au centre de la plage de détection,

e) en choisissant la différence maximale respective, on détermine le quadrant dans lequel le passage clair/sombre du contour est au passage par le contre de la plage détectée et,

f) en fonction des quadrants déterminés, on fournit l'angle ($\vartheta$) comme somme de l'angle initial (0; $\pi/2$; $\pi$; $3\pi/2$) du quadrant constaté et une fraction d'un angle droit ($\pi/2$), la fraction étant égale au quotient d'une différence qui résulte du signal de champ environnant du quadrant déterminé et du signal de champ environnant du quadrant voisin de la direction angulaire et de la différence maximale autorisée du quadrant déterminé.

2. Procédé selon la revendication 1, caractérisé en ce que les signaux de champ environnant s'obtiennent par la détection opto-électronique des différents quadrants.

3. Procédé selon la revendication 1, caractérisé en ce que les signaux de champ environnant se calculent à partir des valeurs des signaux-images des points-image appartenant aux différents quadrants.

4. Procédé selon la revendication 1 ou 2, caractérisé en ce que pour la détection opto-électronique des quadrants, on utilise une photodiode à quadrants.

5. Procédé selon la revendication 1 ou 2, caractérisé en ce que pour la détection opto-électronique des quadrants, on utilise des guides de lumière suivis par des convertisseurs opto-électroniques et les surfaces d'entrée de lumière dans les fibres se trouvent dans les différents quadrants.

6. Procédé selon l'une des revendication 1 à 5, caractérisé en ce que le passage clair/sombre du contour qui balaie le milieu de la plage de détection se détermine comme formant une différence entre la valeur moyenne formée par les signaux environnants et la valeur respective du signal-image.

7. Dispositif pour déterminer la direction d'un contour de modèle dans un modèle pour obtenir point par point et ligne par ligne un signal-image à l'aide d'une détection par un convertisseur optique et on exploite en outre dans une plage de détection agrandie autour du point-image, dispositif caractérisé par:

a) une installation de détection (6) donnant un signal-image ($U_0$) par mesure de la clarté au milieu de la plage de détection et pour obtenir quatre signaux environnants ($U_A$, $U_B$, $U_C$, $U_D$) par mesure de la clarté dans quatre quadrants (A, B, C, D) subdivisant la plage de détection, l'une des subdivisions constituant la ligne de référence de l'angle ($\vartheta$) compris entre cette ligne de référence et le passage clair/sombre au centre de la tige de détection lorsque le contour y passe,

b) un étage de différence (18) relié à l'installation de détection (6) pour former les signaux de différence à partir des signaux de champ environnant ($U_A$, $U_B$, $U_C$, $U_D$) de quadrants en regard et voisins dans la plage de détection,

c) un étage de détection de quadrants (26) communiquant avec l'étage de différence (18) pour générer un signal de détection ou de reconnaissance de quadrants à partir du signal de différence maximale respectif des quadrants, dans lequel se trouve le passage clair/sombre du contour,

d) un étage de détection de contours (20) lié à l'installation de détection (6) pour déterminer que le passage clair/sombre du contour passe par le milieu de la plage de détection dans le signal-image,

e) un calculateur d'angle (24) relié à l'étage de différence (18) et à l'étage de reconnaissance de quadrants (26) pour calculer l'angle ($\vartheta$) respectif lorsque le passage clair/sombre du contour se trouve au centre en fonction des quadrants fixés.

8. Installation selon la revendication 7, caractérisée en ce que l'étage de détection de quadrants (26) se compose de comparateurs pour sélectionner les signaux maximaux de différence.

9. Installation selon la revendication 7 ou 8, caractérisée en ce que le calculateur d'angle (24) comprend:

a) des sources de signaux (76, 77, 78) pour l'angle initial de quadrants,

b) des commutateurs analogiques (69, 70, 75) commandés à partir des signaux de reconnaissance de quadrants pour choisir les signaux de différence nécessaires pour le calcul et un angle initial,

c) un diviseur (72) pour former le quotient des signaux de différence, et

d) un additionneur (74) pour additionner le quotient et l'angle initial.

10. Installation selon les revendications 7–9, caractérisée en ce que l'installation de détection (6) comporte une photodiode à quadrants pour mesurer la clarté dans les différents quadrants.

11. Installation selon les revendications 7–9, caractérisée en ce que l'installation de détection (6) comporte pour mesurer la clarté dans les différents quadrants, des fibres optiques suivies de convertisseurs opto-électroniques, les surfaces d'entrée des fibres optiques étant associées aux quadrants.

Fig. 1

Fig. 2

Fig. 3

Fig. 4

Fig. 5

Fig. 6

Fig.7

EP 0 084 780 B1

Fig. 8a

Fig. 8b